# EUROPEAN PATENT SPECIFICATION

(11) **EP 3 249 142 B1**
(45) Date of publication and mention of the grant of the patent: **17.11.2021**
(21) Application number: 16425046.6
(22) Date of filing: 24.05.2016
(51) Int. Cl.: E05D 11/10, B60R 13/01

(54) **COVERING DEVICE FOR A TRUNK OF A MOTOR VEHICLE**
KOFFERRAUMABDECKUNG EINES KRAFTFAHRZEUGS
TABLETTE DE VÉHICULE AUTOMOBILE

(43) Date of publication of application: 29.11.2017
(73) Proprietor: FCA Italy S.p.A., 10135 Torino (IT)
(72) Inventor: Piccinini, Antonio, 10135 Torino (IT)
(74) Representative: Lovino, Paolo

(56) References cited:
- FR-A1- 2 883 903
- GB-A- 2 412 097
- GB-A- 2 527 979

## Description

The present invention relates to a covering device for a trunk of a motor vehicle.

In motor vehicles, the trunk is usually provided with a loading floor defined by a rigid panel, which can be rotated between a horizontal lowered position, where it covers a bottom surface of the trunk, and a tilted raised position, where it gives access to an underlying space and/or to a spare wheel and/or to service tools housed beneath the loading floor.

The loading floor has a front end coupled to the sides of the trunk, free to rotate between the two aforementioned positions. Typically, the panel supported by fixed shoulders in the trunk defines the horizontal lowered position. In the absence of any luggage, only the weight of the panel gives stability to this position, so that, when the car is in motion, some noise due to vibrations of the panel is usually coming from the trunk.

With regard to the tilted raised position, it can be held thanks to hooking systems, e.g. systems using a cable or bolt, which must be manually activated and/or released by the user. It is clear that these coupling systems cause an unwanted encumbrance and require the use of both hands of the user (the first to rotate upward the rear end of the panel, and the second to engage the coupling system), while the lifting operation should be simplified, since the user also has to handle the luggage. FR 2 883 903 A1 discloses an example of a covering device.

The object of the present invention is to provide a covering device for a trunk of a motor vehicle, which solves in a simple and economic manner the aforesaid drawbacks.

According to the present invention, a covering device for a trunk of a motor vehicle is provided; the covering device comprising:
- a panel comprising a front portion;
- a support structure;
- a hinge coupling said front portion to said support structure and allowing said panel to rotate about a horizontal hinge axis between a lowered position, where said panel is substantially horizontal, and a raised position, where said panel is tilted upward;
- a retention and angular positioning system to hold said panel in at least one of the lowered and raised positions;
said hinge comprising at least one hinge pin and at least one hinge seat rotatably engaged by said hinge pin about said hinge axis;
said retention and angular positioning system being associated to said hinge and comprising:
- at least one spring, which exerts an elastic force to hold said panel in said at least one of the lowered and raised positions and allows said panel to rotate when a rotational torque greater than a given threshold is exerted on said panel;
- at least one shaped portion forming part of said hinge pin and having an area with a cross-section other than circular;
wherein said spring defines at least part of said hinge seat and comprises a retention portion, which has, in a rest configuration, an inner profile with a shape complementary to the one of said area; said inner profile being coupled to said shaped portion.

For a better understanding of the present invention it is now described a preferred embodiment, purely by way of non-limiting example, with reference to the accompanying drawings, in which:
- Figure 1 is a perspective view of a preferred embodiment of the covering device for a trunk of a motor vehicle according to the present invention;
- Figure 2 shows, in enlarged scale and in exploded view, some components of the covering device of Figure 1;
- Figure 3 shows one of the components of Figure 2 from a different point of view; and
- Figure 4 shows two different positions of components shown in Figure 2.

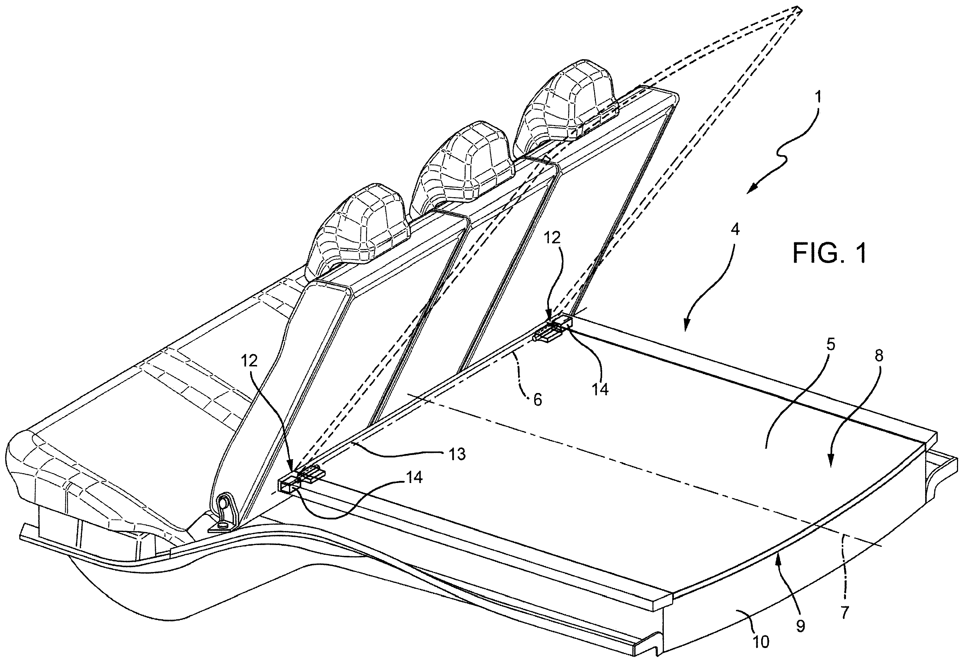

In Figure 1, the reference number 1 indicates a covering device arranged in a trunk 4 (partially shown) of a motor vehicle and comprising a rigid panel 5, which is rotatable about a horizontal hinge axis 6, orthogonal to a longitudinal axis 7 defining the direction of travel of the motor vehicle. The panel 5 has an upper surface 8 supporting the luggage or other objects, so that the device 1 defines a loading floor. During normal driving conditions of the motor vehicle, the panel 5 is arranged in a lowered position, where it is substantially horizontal and has a lower surface 9 that covers a bottom floor 10 of the trunk 4. This latter may house a spare wheel and/or service tools and/or may define an additional support surface for small objects and/or luggage. The panel 5 can be spaced from the floor 10 and define, with this latter, an underlying space.

According to a variation not shown, the device 1 defines a parcel shelf of the trunk 4, instead of a loading floor.

When it is rotated upward about the axis 6 by the user, the panel 5 comes to a raised position (in dotted line), where it is tilted so that the user can reach the objects arranged beneath the surface 9.

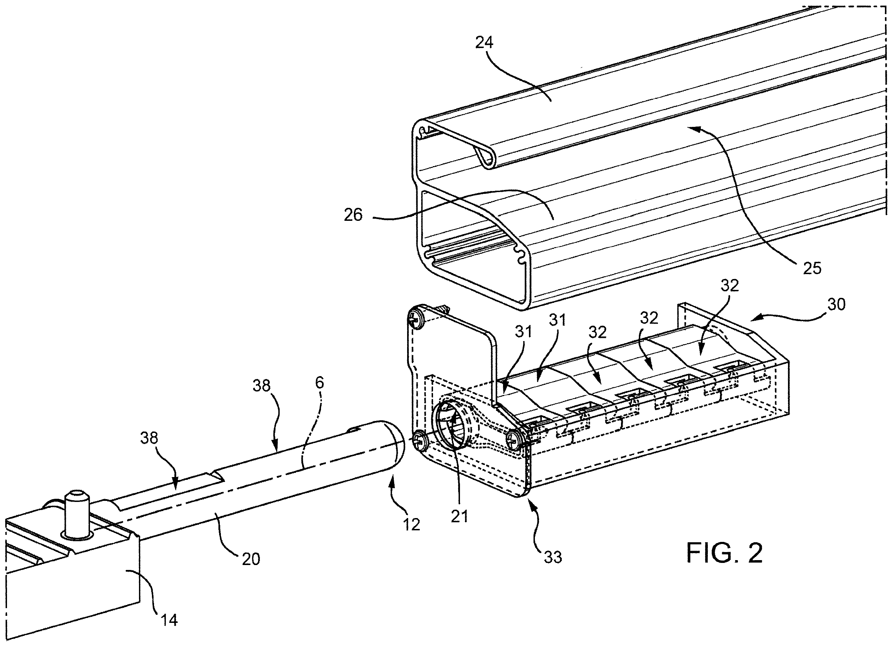

To allow the rotation of the panel 5 between the lowered and raised positions, the device 1 comprises a hinge 12 coupling a front end portion 13 of the panel 5 to a support body or structure 14 fixedly arranged in the trunk 4 (here and below, the terms "rear", "front", "front", "forward", "back", etc... are meant with respect to the travel direction of the motor vehicle along the axis 7) . As shown in Figure 2, the hinge 12 comprises at least one hinge pin 20, which extends along the axis 6 and, in particular, is fixed with respect to the structure 14; and a corresponding hinge seat 21, which is rotatably engaged by the pin 20 and, in particular, is fixed with respect to the panel 5. An alternative dual solution could provide the pin 20 fixed with respect to the panel 5 and the seat 21 fixed with respect to the structure 14.

In particular, the hinge 12 comprises two coaxial and mutually facing pins 20 and two corresponding seats 21. Preferably, the device 1 comprises a support profiled element 24, which is elongated along the axis 6, has a retention seat 25 engaged in a manner not shown by the front edge of the front portion 13, and axially ends with two opposing portions 26, respectively supporting the seats 21 in fixed positions, as described hereinafter in more detail.

According to the present invention, the device 1 comprises a retention and angular positioning system, which is indicated by the reference number 30, is associated to the hinge 12, exerts an elastic force to hold the panel 5 in at least one of the lowered and raised positions, and allows the panel 5 to rotate when the user exerts on the panel 5 a rotational torque greater than a given threshold.

Preferably, the system 30 comprises at least one spring 31 to hold the panel 5 in the lowered position, and at least one spring 32 to hold the panel in the raised position. In particular, the springs 31, 32 are aligned and consecutive along the axis 6. The springs 31 and 32 define at least part of the seat 21 and, in particular, are fixedly arranged with respect to the panel 5.

Advantageously, the springs 31 and 32 are housed in a fork-shaped casing 33 fixed to the element 24 in a known way, not described in more detail. The casing 33 and the springs 31 and 32 define an insert housed in the portion 26.

A positioning system not shown is conveniently provided to hold the springs 31 and 32 mutually aligned, even before the assembly of the pin 20, and/or to hold the springs 31 and 32 in substantially fixed reference positions with respect to the casing 33.

Moreover, a wall belonging to the casing 33 or to the portion 26 defines a shoulder which rotates all the springs 31 and 32 together with the support profiled element 24 and the panel 5, while the pin 20 remains fixed.

In the shown example, the springs 31 and 32 are the same: the retention action of the system 30, and therefore the threshold torque that the user must exceed to rotate the panel 5 in each of the lowered and raised positions, may be adjusted by changing the number of the springs 31 and/or 32 (and consequently the length of the casing 33). For example, the system 30 includes two springs 31 and three springs 32.

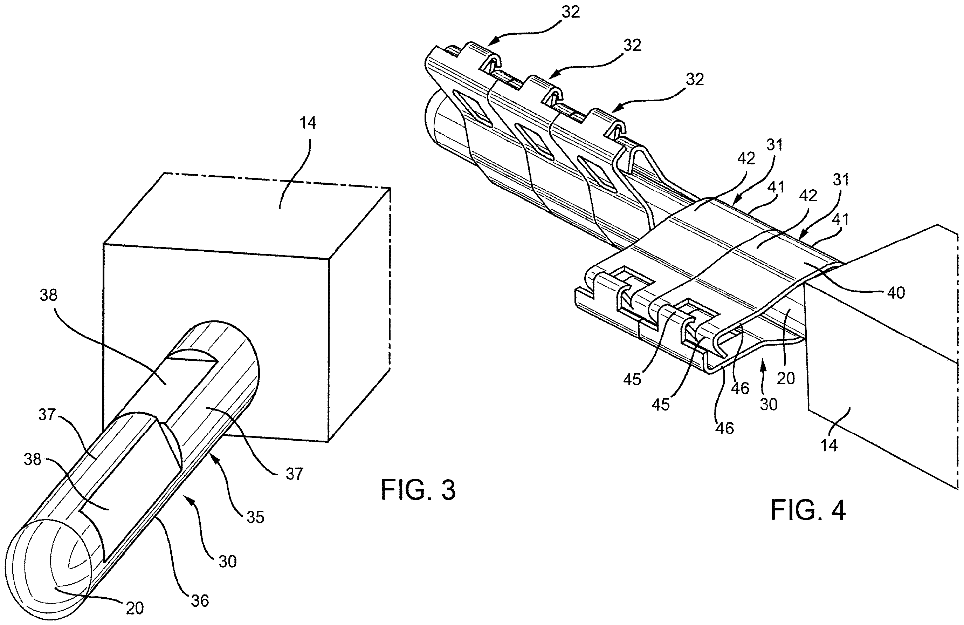

As shown in Figure 3, for each of the angular positions in which the panel 5 must be held, the system 30 includes a corresponding shaped portion 35 and 36 of the pin 20: the springs 31 are fitted around the shaped portion 35, while the springs 32 are fitted around the shaped portion 36.

The shaped portions 35, 36 have cross-sections other than the cylindrical circular one. In particular, the cross-sections of the shaped portions 35 and 36 are defined by respective first circular areas 37, which extend as a mutual prolongation, and by respective first flat areas 38. The first flat areas 38 are mutually offset about the axis 6 by an angle equal to the one comprised between the lowered and raised positions.

As shown in Figure 4, the springs 31 and 32 comprise respective retention portions 40 having an inner profile, which is coupled to the shaped portion 35, 36 and, in a rest configuration, is complementary to the cross-section of the shaped portion 35, 36. In the specific case, this profile is U-shaped and comprises a second circular area 41, coupled to the first circular area 37, and a second flat area 42. When the second flat area 42 is coupled to the first flat area 38, the retention portion 40 exerts an elastic pressure on the first flat area 38, resulting in a resistant torque which blocks the rotation of the panel 5. When the second flat area 42 is coupled to the first circular area 37, the retention portion 40 is more spread apart with respect to the rest configuration and the second flat area 42 slides by friction on the first circular area 37 without touching the first flat area 38. In this configuration, there is a simple friction between a flat area and a circular area at a tangent point, so that the resistant torque exerted by the system 30 is smaller than the rest configuration and is not sufficient to angularly lock the panel 5. Figure 4 shows all of the springs 31 and 32 in their rest configuration for clarity's sake, but obviously, this condition can never actually occur.

As shown in Figures 3 and 4, the springs 31 and 32 are preferably defined by leaf springs (and not by wire springs, for example). In particular, the leaf springs are closed in a loop at end portions 45 that are mutually coupled and are joined to the retention portion 40 by means of respective arms 46, which are substantially radial and mutually facing. These types of springs exert an elastic force strong enough to support the weight of the panel 5 when this latter is in the raised position.

In use, when the user wants to lift the panel 5, he has to apply a rotational torque sufficient to overcome the resistance threshold of the second flat areas 42 of the springs 31 on the first flat area 38 of the shaped portion 35. Upon reaching the raised position, the second flat areas 42 of the springs 32 snappingly engage the first flat area 38 of the shaped portion 36, thus determining the angular locking of the panel 5.

The reverse rotation is the same, i.e. the second flat areas 42 of the springs 32 are uncoupled from the first flat area 38 of the shaped portion 36 by exceeding the threshold torque; then, at the end of the downward rotation, the second flat areas 42 of the springs 31 snappingly engage the first flat area 38 of the shaped portion 35.

From the aforesaid, it is clear how the system 30 is relatively simple and compact, since it is integrated in the hinge 12. In fact, the system 30 is made up of components that define the pin 20 (i.e. the shaped portions 35 and 36) and of components that define the seat 21 (i.e. the springs 31 and 32).

Moreover, the panel 5 is automatically locked in the raised and in the lowered positions when these are reached, with no manual intervention of the user to activate or deactivate a dedicated coupling system. In this way, for example, the user can lift the panel 5 with a single hand, without having to intervene with the other hand to lock the panel 5 in the raised position.

Other advantages have been described above, or are obvious to a person skilled in the art based on the aforesaid construction features.

Finally, it is clear that the device 1 here described and shown can be modified and varied without departing from the protective scope of the present invention, as defined in the appended claims.

In particular, the shape and/or the number and/or the relative position of the springs 31 and 32 might be different from what indicated by way of example.

## Claims

1. A covering device (1) for a trunk (4) of a motor vehicle; the covering device comprising:
- a panel (5) comprising a front portion (13);
- a support structure (14);
- a hinge (12) coupling said front portion (13) to said support structure (14) and allowing said panel (5) to rotate about a horizontal hinge axis (6) between a lowered position, where said panel (5) is substantially horizontal, and a raised position, where said panel (5) is tilted upward;
- a retention and angular positioning system (30) to hold said panel (5) in at least one of the lowered and raised positions;
said hinge (12) comprising at least one hinge pin (20) and at least one hinge seat (21) rotatably engaged by said hinge pin (20) about said hinge axis (6);
said retention and angular positioning system (30) being associated to said hinge (12) and comprising:
- at least one spring (31,32), which exerts an elastic force to hold said panel (5) in said at least one of the lowered and raised positions
- at least one shaped portion (35, 36) forming part of said hinge pin (20) and having an area (38) with a cross-section other than circular;
**characterized in that** said spring (31,32) defines at least part of said hinge seat (21) and allows said panel (5) to rotate when a rotational torque greater than a given threshold is exerted on said panel (5); wherein the spring comprises a retention portion (40), which has, in a rest configuration, an inner profile with a shape complementary to the one of said area (38); said inner profile being coupled to said shaped portion (35,36).

2. The device according to claim 1, **characterized in that** said shaped portion has a cross-section defined by a first circular area (37) and by a first flat area (38).

3. The device according to claim 1 or 2, **characterized in that** the inner profile of said retention portion (40) is U-shaped.

4. The device according to claims 2 and 3, **characterized in that** the inner profile of said retention portion (40) comprises a second circular area (41) coupled to said first circular area (37) and a second flat area (42), which exerts said elastic retention force when it is coupled to said first flat area (38).

5. The device according to any one of the previous claims, **characterized in that** said spring (31,32) is defined by a leaf spring.

6. The device according to claim 5, **characterized in that** said leaf spring ends with two portions (45) hooked together to close the leaf spring in a loop.

7. The device according to any one of the preceding claims, **characterized in that** said retention and angular positioning system (30) comprises at least one first spring (31) to hold said panel in the lowered position, and at least one second spring (32) to hold said panel in the raised position.

8. The device according to claim 7, **characterized in that** said first and second spring (31,32) are aligned and consecutive along said hinge axis (6).

9. The device according to any one of the preceding claims, **characterized in that** said retention and angular positioning system (30) comprises a plurality of identical springs to hold said panel (5) in said at least one of the lowered and raised positions.

## Patentansprüche

1. Abdeckvorrichtung (1) für einen Kofferraum (4) eines Kraftfahrzeugs, wobei die Abdeckvorrichtung umfasst:
- eine Platte (5), die einen vorderen Abschnitt (13) umfasst;
- eine Stützstruktur (14);
- ein Scharnier (12), das den vorderen Abschnitt (13) an die Stützstruktur (14) ankoppelt und ermöglicht, dass die Platte (5) um eine horizontale Scharnierachse (6) zwischen einer abgesenkten Position, in der die Platte (5) im Wesentlichen horizontal ist, und einer angehobenen Position, in der die Platte (5) nach oben gekippt ist, schwenkt;
- ein Halte- und Winkelpositioniersystem (30) zum Halten der Platte (5) in wenigstens einer von der abgesenkten und der angehobenen Position;
wobei das Scharnier (12) wenigstens einen Scharnierbolzen (20) und wenigstens einen Scharniersitz (21), mit dem der Scharnierbolzen (20) um die Scharnierachse (6) drehbar in Eingriff steht, umfasst;
wobei das Halte- und Winkelpositioniersystem (30) dem Scharnier (12) zugeordnet ist und umfasst:
- wenigstens eine Feder (31, 32), welche eine elastische Kraft ausübt, um die Platte (5) in der wenigstens einen von der abgesenkten und der angehobenen Position zu halten;
- wenigstens einen geformten Abschnitt (35, 36), der einen Teil des Scharnierbolzens (20) bildet und einen Bereich (38) mit einem Querschnitt, der nicht kreisförmig ist, aufweist;
**dadurch gekennzeichnet, dass** die Feder (31, 32) wenigstens einen Teil des Scharniersitzes (21) definiert und der Platte (5) ermöglicht zu schwenken, wenn ein Drehmoment, das größer als ein vorgegebener Schwellenwert ist, auf die Platte (5) ausgeübt wird; wobei die Feder einen Halteabschnitt (40) umfasst, welcher in einer Ruhekonfiguration ein Innenprofil mit einer Form aufweist, die zu derjenigen des Bereichs (38) komplementär ist; wobei das Innenprofil mit dem geformten Abschnitt (35, 36) gekoppelt ist.

2. Vorrichtung nach Anspruch 1, **dadurch gekennzeichnet, dass** der geformte Abschnitt einen Querschnitt aufweist, der durch einen ersten kreisförmigen Bereich (37) und durch einen ersten flachen Bereich (38) definiert ist.

3. Vorrichtung nach Anspruch 1 oder 2, **dadurch gekennzeichnet, dass** das Innenprofil des Halteabschnitts (40) U-förmig ist.

4. Vorrichtung nach den Ansprüchen 2 und 3, **dadurch gekennzeichnet, dass** das Innenprofil des Halteabschnitts (40) einen zweiten kreisförmigen Bereich (41), der mit dem ersten kreisförmigen Bereich (37) gekoppelt ist, und einen zweiten flachen Bereich (42), welcher die elastische Haltekraft ausübt, wenn er mit dem ersten flachen Bereich (38) gekoppelt ist, umfasst.

5. Vorrichtung nach einem der vorhergehenden Ansprüche, **dadurch gekennzeichnet, dass** die Feder (31, 32) durch eine Blattfeder definiert ist.

6. Vorrichtung nach Anspruch 5, **dadurch gekennzeichnet, dass** die Blattfeder mit zwei Abschnitten (45) endet, die miteinander verhakt sind, um die Blattfeder in einer Schleife zu schließen.

7. Vorrichtung nach einem der vorhergehenden Ansprüche, **dadurch gekennzeichnet, dass** das Halte- und Winkelpositioniersystem (30) wenigstens eine erste Feder (31), um die Platte in der abgesenkten Position zu halten, und wenigstens eine zweite Feder (32), um die Platte in der angehobenen Position zu halten, umfasst.

8. Vorrichtung nach Anspruch 7, **dadurch gekennzeichnet, dass** die erste und die zweite Feder (31, 32) zueinander ausgerichtet sind und entlang der Scharnierachse (6) aufeinanderfolgen.

9. Vorrichtung nach einem der vorhergehenden Ansprüche, **dadurch gekennzeichnet, dass** das Halte- und Winkelpositioniersystem (30) mehrere identische Federn umfasst, um die Platte (5) in der wenigstens einen von der abgesenkten und der angehobenen Position zu halten.

## Revendications

1. Dispositif de couverture (1) pour un coffre (4) d'un véhicule motorisé ; le dispositif de couverture comprenant :
- un panneau (5) comprenant une partie avant (13) ;
- une structure de support (14) ;
- une charnière (12) accouplant ladite partie avant (13) à ladite structure de support (14) et permettant audit panneau (5) de tourner autour d'un axe de charnière horizontal (6) entre une position abaissée, dans laquelle ledit panneau (5) est sensiblement horizontal, et une position élevée, dans laquelle ledit panneau (5) est incliné vers le haut ;
- un système de positionnement angulaire et de retenue (30) pour maintenir ledit panneau (5) dans au moins l'une des positions abaissée et élevée ;
ladite charnière (12) comprenant au moins une broche de charnière (20) et au moins un siège de charnière (21) mis en prise rotative par ladite broche de charnière (20) autour dudit axe de charnière (6) ;
ledit système de positionnement angulaire et de retenue (30) étant associé à ladite charnière (12) et comprenant :
- au moins un ressort (31, 32), qui exerce une force élastique pour maintenir ledit panneau (5) dans ladite au moins une des positions abaissée et élevée
- au moins une portion façonnée (35, 36) formant une partie de ladite broche de charnière (20) et présentant une zone (38) ayant une section transversale autre que circulaire ;
**caractérisé en ce que** ledit ressort (31, 32) définit au moins une partie dudit siège de charnière (21) et permet audit panneau (5) de tourner lorsqu'un couple rotatif supérieur à un seuil donné est exercé sur ledit panneau (5) ; dans lequel le ressort comprend une portion de retenue (40), qui présente, dans une configuration de repos, un profil intérieur ayant une forme complémentaire de celle de ladite zone (38) ; ledit profil intérieur étant accouplé à ladite portion façonnée (35, 36).

2. Dispositif selon la revendication 1, **caractérisé en ce que** ladite portion façonnée présente une section transversale définie par une première zone circulaire (37) et par une première zone plate (38).

3. Dispositif selon la revendication 1 ou 2, **caractérisé en ce que** le profil intérieur de ladite portion de retenue (40) est en forme de U.

4. Dispositif selon les revendications 2 et 3, **caractérisé en ce que** le profil intérieur de ladite portion de retenue (40) comprend une seconde zone circulaire (41) accouplée à ladite première zone circulaire (37) et une seconde zone plate (42), qui exerce ladite force de retenue élastique lorsqu'elle est accouplée à ladite première zone plate (38).

5. Dispositif selon l'une quelconque des revendications précédentes, **caractérisé en ce que** ledit ressort (31, 32) est défini par un ressort à lames.

6. Dispositif selon la revendication 5, **caractérisé en ce que** ledit ressort à lames se termine par deux portions (45) accrochées l'une à l'autre pour fermer le ressort à lames en une boucle.

7. Dispositif selon l'une quelconque des revendications précédentes, **caractérisé en ce que** ledit système de position angulaire et de retenue (30) comprend au moins un premier ressort (31) pour maintenir ledit panneau dans la position abaissée, et au moins un second ressort (32) pour maintenir ledit panneau dans la position élevée.

8. Dispositif selon la revendication 7, **caractérisé en ce que** lesdits premier et second ressorts (31, 32) sont alignés et consécutifs le long dudit axe de charnière (6).

9. Dispositif selon l'une quelconque des revendications précédentes, **caractérisé en ce que** ledit système de position angulaire et de retenue (30) comprend une pluralité de ressorts identiques pour maintenir ledit panneau (5) dans ladite au moins une des positions abaissée et élevée.
